(19) Europäisches Patentamt
European Patent Office
Office européen des brevets

(11) Publication number: **0 160 354 B1**

# (12) EUROPEAN PATENT SPECIFICATION

(45) Date of publication of patent specification: **11.09.91** (51) Int. Cl.$^5$: **C08L 79/08**, C08J 5/18

(21) Application number: **85300651.8**

(22) Date of filing: **30.01.85**

The file contains technical information submitted after the application was filed and not included in this specification

## (54) Injection moldable polyamide-imide-phthalamide copolymers containing polyetherimides.

(30) Priority: **31.01.84 US 576137**

(43) Date of publication of application:
**06.11.85 Bulletin 85/45**

(45) Publication of the grant of the patent:
**11.09.91 Bulletin 91/37**

(84) Designated Contracting States:
**AT BE CH DE FR GB IT LI LU NL SE**

(56) References cited:
**US-A- 4 225 686**
**US-A- 4 258 155**
**US-A- 4 309 528**
**US-A- 4 313 868**

(73) Proprietor: **AMOCO CORPORATION**
**200 East Randolph Drive**
**Chicago Illinois 60601(US)**

(72) Inventor: **Brooks, Gary Thomas**
**5 S. 255 Radcliff**
**Naperville Illinois 60540(US)**

(74) Representative: **Ritter, Stephen David et al**
**Mathys & Squire 10 Fleet Street**
**London EC4Y 1AY(GB)**

**EP 0 160 354 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to blends of polyamide-imide-phthalamide copolymers with polyetherimides, and to molding powders, molded articles and films prepared therefrom.

USP 4,313,868 teaches injection mouldable copolymers referred to as polyamide-imide-phthalamide copolymers, or PAI, comprising recurring polyamide units of the structure A which are capable of undergoing imidization

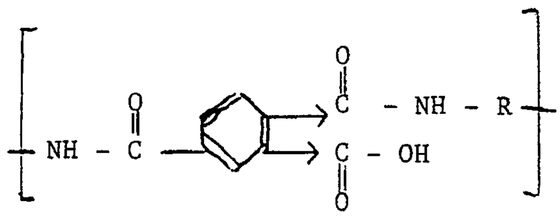

A

and polyamide units of the structure B

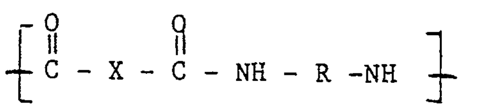

B

where the molar ratio of A units to B units is about 80:20 to 20:80 and wherein R is a divalent aromatic hydrocarbon radical of from about 6 to about 20 carbon atoms or two divalent hydrocarbons joined directly or by stable linkages selected from - O -, - $CH_2$ -, - CO - and - $SO_2$ -, and wherein X is a divalent aromatic radical and denotes isomerisation. The publication also states that these copolymers may be filled from about 30 to 60 weight percent with glass fibres, glass beads or mixtures thereof. USP 4,309,528 also describes these copolymers.

USP 4,258,155 describes blends of polyetherimides and polyamideimides useful in the coating and moulding arts. These blends exhibit a single Tg which is below the reported Tg's for either of the pure components taken alone.

Polyamide-imide-phthalamide copolymers are extremely rigid polymers which lack the inherent toughness needed to compete in those applications which require elevated temperature resistance and good impact strength. The lack of matrix toughness can cause problems when molding thick cross-sectional parts, especially with the filled copolymers, since the copolymer matrix is not strong or tough enough to resist the molding cool down stresses which can result in internal cracks. The art has been looking for improvements in the impact resistance and toughness of the polymer, but it is essential that the additive not impair the excellent curing characteristics of the PAI or its thermal and strength properties, particularly the heat deflection temperature and tensile strength.

This invention provides polyamide-imide-phthalamide copolymers containing polyetherimides and suitable for use as engineering plastics and particularly for use in injection molding.

According to the present invention, there is provided a polymeric blend comprising (i) from 10 to 40 weight percent of a polyetherimide and (ii) from 90 to 60 weight percent of an amide-imide-phthalamide copolymer having recurring polyamide A units of

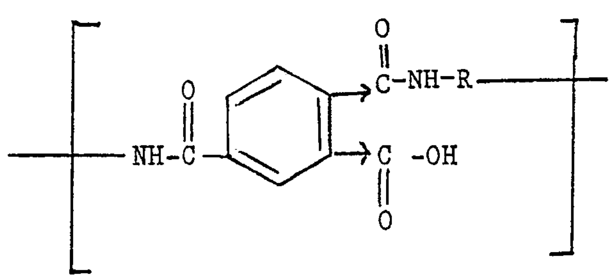

which are capable of undergoing imidization, and polyamide B units of:

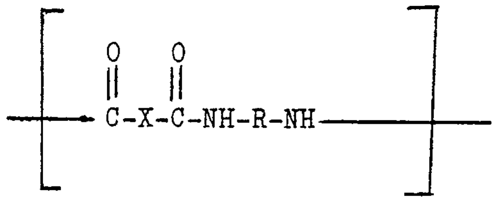

wherein the molar ratio of A units to B units is about 1:1,

wherein each R which may be the same or different is a divalent aromatic hydrocarbon radical and wherein X is a divalent aromatic radical and → denotes isomerisation.

The invention also provides a polymeric blend comprising (i) from 10 to 40 weight percent of a polyetherimide and (ii) from 90 to 60 weight percent of an amide-imide-phthalamide copolymer having recurring polyamide-imide A' units of:

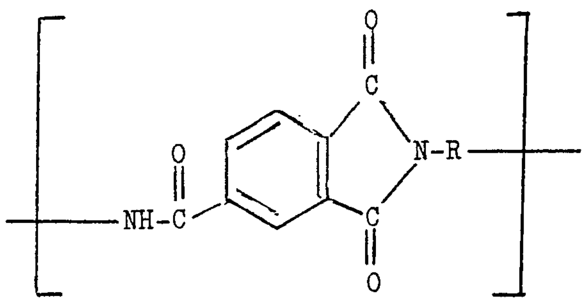

and polyamide B units of:

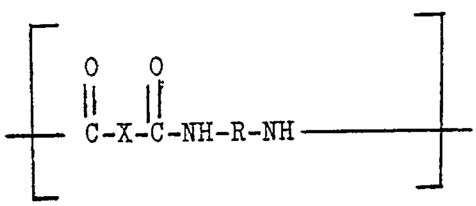

wherein the molar ratio of A' to B units is about 1:1,

wherein each R which may be the same or different is a divalent hydrocarbon radical and X is a divalent aromatic radical.

These blends have excellent physical properties and can readily be injection molded to provide engineering plastics with excellent properties. The polyetherimides improve the physical properties and reduce mold part cracking of neat or filled amide-imide-phthalamide copolymers and also when glass fibres, glass beads, mineral fillers, graphite fiber or graphite powder are coated with the polyetherimides, these can more readily be incorporated into a molded amide-imide-phthalamide object. Polyetherimides have also been found to aid the manufacture of amide-imide-phthalamide films having a thickness of about 0.0127 to about 0.254 mm (about 0.5 to about 10 mils). Films without polyetherimides are so brittle that they cannot be prepared from amide-imide-phthalamide copolymers having a thickness of about 0.5 to about 10 mils without cracking and tearing.

Suitable polyetherimides comprise essentially chemically combined units of the formula:

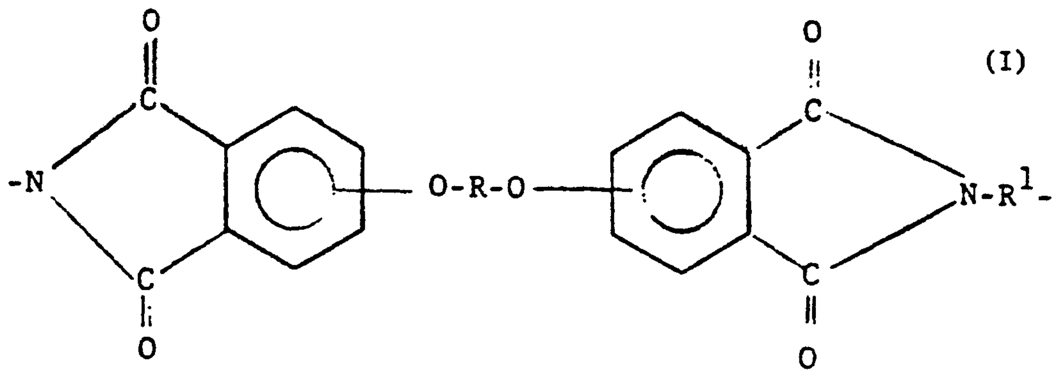

(I)

where R is a member selected from the class consisting of (a) the following divalent organic radicals:

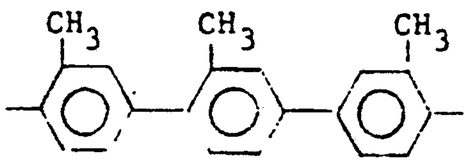

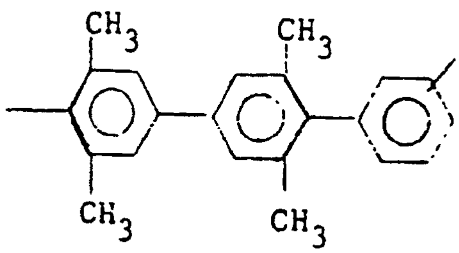

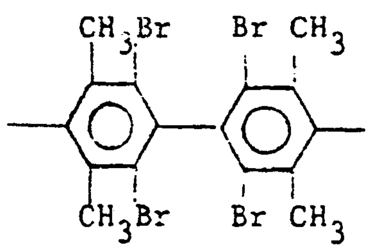

and 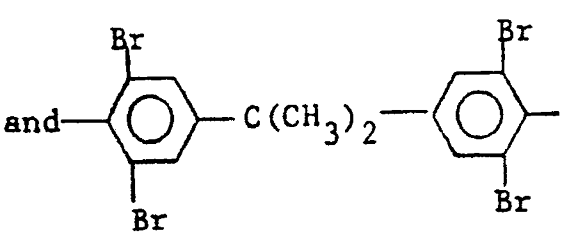

and (b) divalent organic radicals of the general formula:

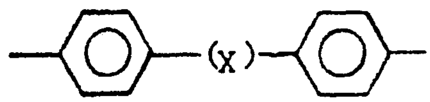

where X is $-C_yH_{2y}-$, y is a whole number equal to 1 to 5 inclusive, and $R^1$ is a divalent organic radical selected from the class consisting of (a) aromatic hydrocarbon radicals having from 6-20 carbon atoms and halogenated derivatives thereof, (b) alkylene radicals and cycloalkylene radicals having from 2-20 carbon atoms, (c) $C_{(2-8)}$ alkylene terminated polydiorganosiloxanes, and (d) divalent radicals included by the formula:

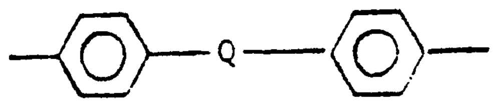

where Q is a member selected from the class consisting of:

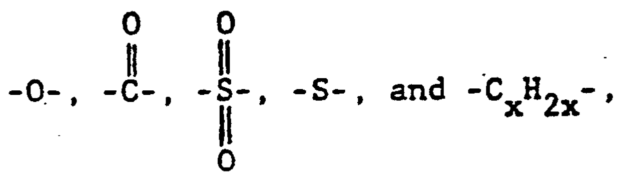

and x is a whole number equal to 1 to 5, inclusive.

We have unexpectedly discovered that blends of polyamide-imide-phthalamide copolymers and polyetherimides disclosed herein over a wide range can be made in which the properties of the blend show a marked average improvement over the properties of the components of these blends, and in some instances, the improvements in properties are unexpected, considering the proportion of either the polyamide-imide or the polyetherimide used. By making the above-described blends, the utility for both these members in the blend can be considerably expanded. In addition, by blending the polyamide-imide with polyetherimides, products can be obtained which are lower in cost than is usually associated with the use of the polyamide-imide alone without significant sacrifice, if any, in thermal properties.

The polyetherimides which are employed in the present invention can be made in accordance with the disclosures and teachings in U.S. Pat. No. 3,847,867 issued Nov. 12, 1974. The polyamide-imides employed in the practice of the instant invention can also be made in accordance with the disclosures and teachings in U.S. Patents 4,313,868 and 4,309,528.

The amide-imide copolymers comprise recurring polyamide A units of:

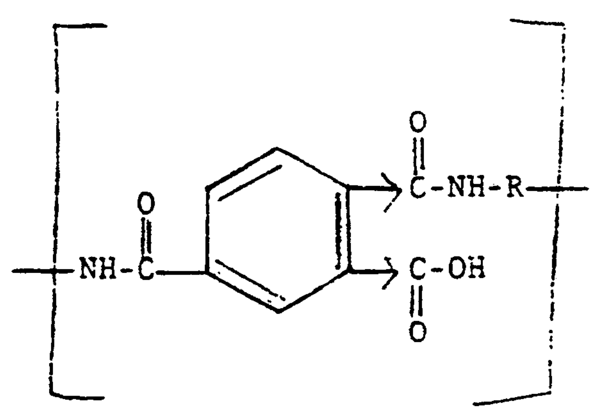

which are capable of undergoing imidization, and polyamide B units of:

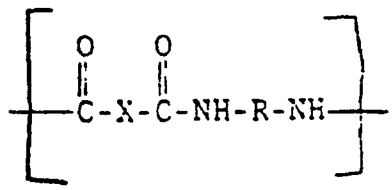

wherein the molar ratio of A units to B units is about 1 to 1 and wherein R is a divalent aromatic hydrocarbon radical of from 6 to 20 carbon atoms or two divalent hydrocarbons joined directly or by stable linkages selected from the group consisting of -O-, methylene, -CO-, $-SO_2-$, and wherein X is a divalent aromatic radical and —> denotes isomerization.

In the injection molded form, the polyamide A units have converted to the polyamide-imide A' units and the copolymer comprises recurring polyamide-imide A' units of:

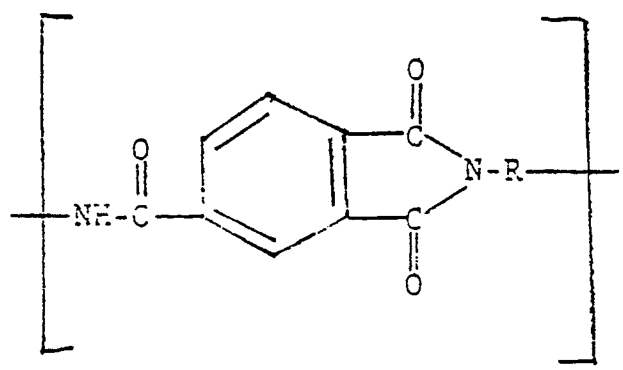

and polyamide B units of:

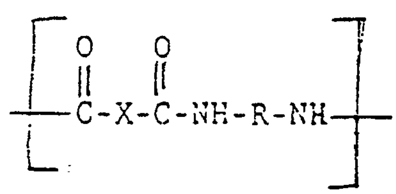

wherein the molar ratio of A' to B units is about 1 to 1 and wherein R and X are defined as above.

The copolymers of this invention are prepared from acyl halide derivatives of dicarboxylic acid such as isophthalic acid or terephthalic acid and an anhydride-containing substance and aromatic diamines. Useful acyl halide derivatives of dicarboxylic acid include:

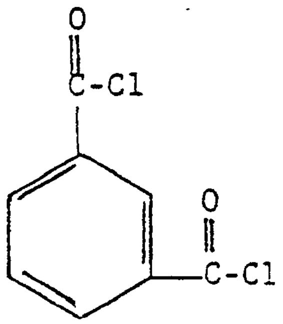

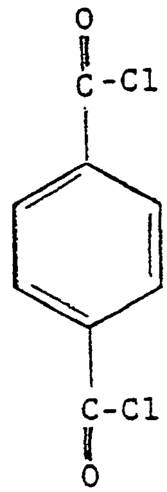

(II)

and related compounds. Suitably, the anhydride containing substance is an acyl halide derivative of the acid anhydride having a single benzene or lower acyl substituted benzene ring. The preferred anhydride is the four acid chloride of trimellitic anhydride (4 TMAC).

Useful aromatic diamines include para- and meta-phenylenediamine, oxybis (aniline), thiobis (aniline), sulfonylbis (aniline), diaminobenzophenone, methylene-bis (aniline), benzidine, 1,5-diaminonaphthalene, oxybis (2-methylaniline), thiobis (2-methylaniline), and the like. Examples of other useful aromatic primary diamines are set out in U.S. Pat. No. 3,494,890 (1970) and U.S. Pat. No. 4,016,140 (1977). The preferred diamine is meta-phenylenediamine.

The copolymers of this invention are prepared by reacting a mixture of an acyl halide derivative of an aromatic tricarboxylic acid anhydride and acyl halide derivatives of aromatic dicarboxylic acids with aromatic diamines.

A preferred class of polyetherimides which are included by formula (III) are polymers comprising of from about 2 to 5000 or more units and preferably from about 5 to about 100 units of the formula:

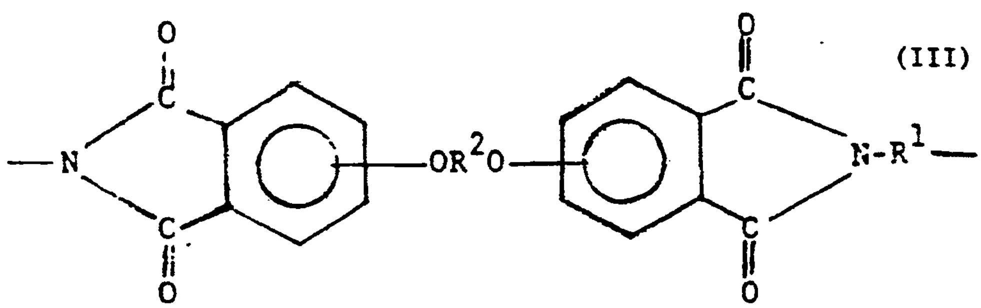

(III)

where $R^1$ is previously defined, and $R^2$ is:

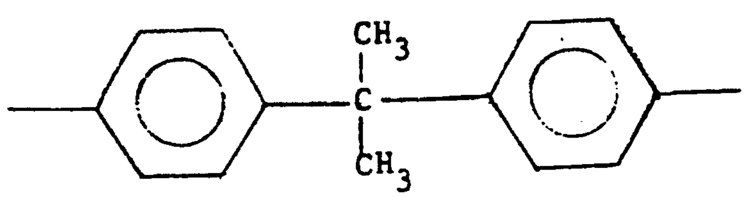

Included by the polyetherimides of formula III, are polymers comprising the following chemically combined units:

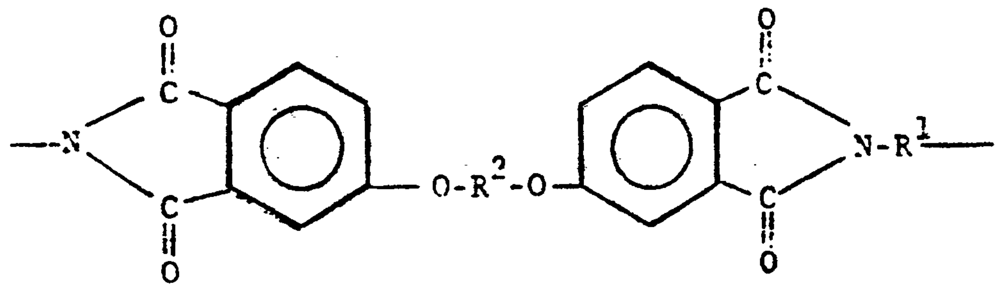

(IV)

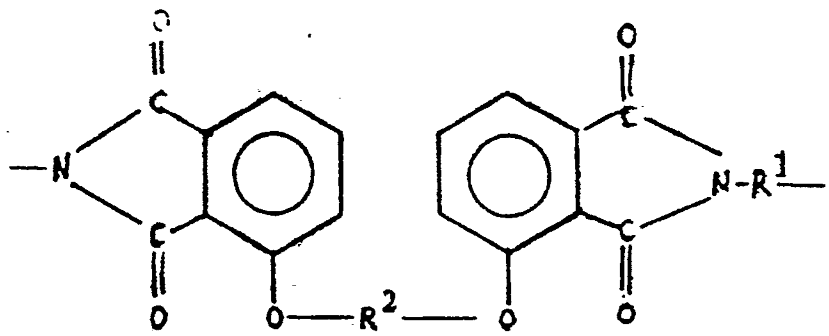

(V)

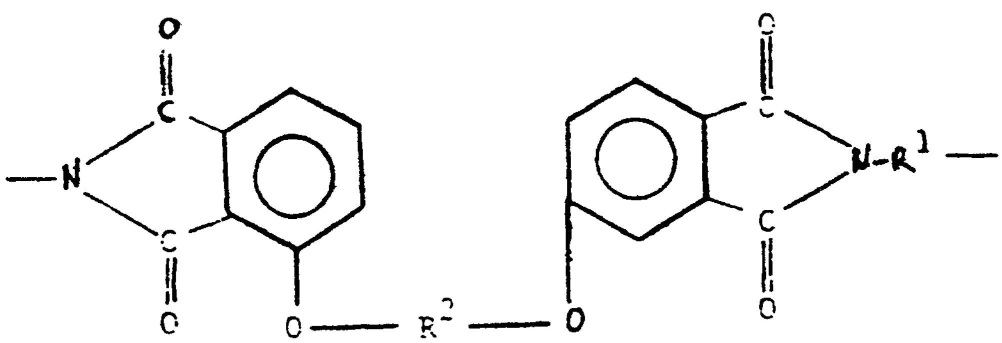

(VI)

and mixtures thereof, where $R^1$ and $R^2$ are defined above.

The polyetherimides of formulas III-VI can be made by effecting reaction between an aromatic bis-(etheranhydride) of the general formula:

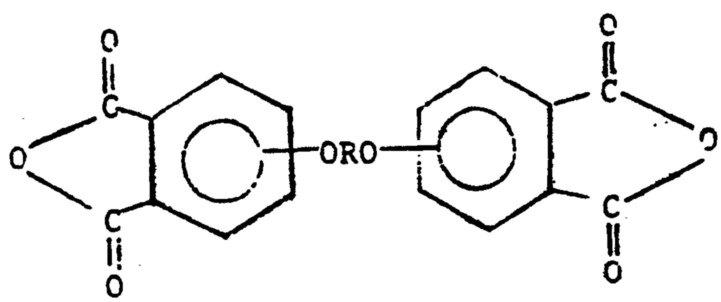

(VII)

and an organic diamine of the general formula:

$H_2NR^1NH_2$ (VIII)

where R and $R^1$ are as previously defined.

There can be employed from 0.95 to 1.05 mols of aromatic bis(etheranhydride) per mol of organic diamine.

In making the polyetherimides, there are employed from 0.95 to 1.05 mols of the aromatic dianhydride of formula VII per mol of the organic diamine of formula VIII. Preferably, one can employ equal or lower amounts of the bisanhydride and diamine.

The aromatic bis(etheranhydride) of formula VII shown in the above-mentioned U.S. Pat. No. 3,847,867, can be prepared from the hydrolysis followed by dehydration of the reaction product of the nitrosubstituted phenyl dinitrile and then continuing the reaction with a dialkali metal salt of a dihydric aryl compound in the presence of a dipolar aprotic solvent, where the alkali metal salt has the general formula:

$$Alk\text{-}O\text{-}R^1\text{-}O\text{-}Alk$$

where $R^1$ has the meanings given above and preferably is the same as $R^2$ and Alk is an alkali metal ion. Various well-known procedures can be used to convert the resulting tetranitriles to the corresponding tetracids and dianhydrides.

The amount of the polyetherimide added to the polyamide-imide-phthalamide copolymer can be 10 to 40 weight percent.

The addition of these polyetherimides increases the physical properties as follows:

Table 1

| Sample | | A | B | C | D | E |
|---|---|---|---|---|---|---|
| Polyamide-imide, % | | 96.5 | 87 | 77.5 | 67.5 | 58 |
| Polyetherimide, % | | - | 9.5 | 19 | 29 | 38.5 |
| $TiO_2$, % | | 3.0 | 3.0 | 3.0 | 3.0 | 3.0 |
| PTFE, % | | 0.5 | 0.5 | 0.5 | 0.5 | 0.5 |
| Blend Ratio PAI/PEI | | 100/0 | 90/10 | 80/20 | 70/30 | 60/40 |
| Physical Properties | | | | | | |
| Tensile Strength | | | | | | |
| As-Molded | MPa | 20.7 | 46.9 | 36.6 | 53.8 | 66.9 |
| | ($X10^3PSI$) | ( 3.0) | ( 6.8) | ( 5.3) | ( 7.8) | ( 9.7) |
| Cured @ 500°F | MPa | - | 86.9 | 120.1 | 141.5 | - |
| | ($X10^3PSI$) | - | (12.6) | (17.4) | (20.5) | - |
| Cured @ 515°F | MPa | 114.5 | 164.2 | 157.3 | 149.0 | 136.6 |
| | ($X10^3PSI$) | (16.6) | (23.8) | (22.8) | (21.6) | (19.8) |
| Tensile Elongation, % | | | | | | |
| As-Molded | | 1.4 | 2.6 | 1.8 | 2.3 | 4.6 |
| Cured @ 500°F | | - | 4.8 | 6.4 | 7.4 | - |
| Cured @ 515°F | | 5.8 | 8.2 | 9.2 | 10.0 | 9.3 |
| Flexural Modulus | | | | | | |
| As-Molded | $X10^3MPa$ | 5.2 | 3.6 | 3.8 | 3.8 | 4.4 |
| | ($X10^6PSI$) | ( 0.75) | ( 0.52) | ( 0.55) | ( 0.55) | ( 0.64) |
| Cured @ 500°F | $X10^3MPa$ | - | 4.4 | 4.3 | 4.2 | - |
| | ($X10^6PSI$) | - | ( 0.64) | ( 0.63) | ( 0.61) | - |
| Cured @ 515°F | $X10^3MPa$ | 5.8 | 4.5 | 4.3 | 4.3 | 3.7 |
| | ($X10^6PSI$) | ( 0.84) | ( 0.65) | ( 0.63) | ( 0.59) | ( 0.54) |

Table 1 (continued)

| | | | | | | | |
|---|---|---|---|---|---|---|---|
| Izod Impact, Notched | | | | | | | |
| As-Molded | J/m | * | 10.7 | 26.7 | 26.7 | 5.3 |
| | (ft-lbs/in) | | ( 0.2) | ( 0.5) | ( 0.5) | ( 0.1) |
| Cured @ 500°F | J/m | - | 48.0 | 42.6 | 74.6 | - |
| | (ft-lbs/in) | - | ( 0.9) | ( 0.8) | ( 1.4) | - |
| Cured @ 515°F | J/m | 21.3 | 42.6 | 69.3 | 80.0 | 64.0 |
| | (ft-lbs/in) | ( 0.4) | ( 0.8) | ( 1.3) | ( 1.5) | ( 1.2) |
| Dart Impact, | | | | | | |
| Cured @ 515°F | N/m | .22 | - | 2.49 | - | - |
| | (in-lbs) | ( 2.0) | - | (22.6) | - | - |
| HDT, | | | | | | |
| As-Molded | °C | 246 | 250 | 242 | 225 | 206 |
| | (°F) | (475) | (482) | (468) | (437) | (403) |
| Cured @ 500°F | °C | - | 282 | 282 | 274 | - |
| | (°F) | - | (540) | (539) | (526) | - |
| Cured @ 515°F | °C | 289 | 295 | 282 | 283 | - |
| | (°F) | (553) | (563) | (540) | (542) | - |

* Sample broke during notching (sample preparation)

500°F is 260°C
515°F is 268°C

Table II

| Sample | | F | G | H | I |
|---|---|---|---|---|---|
| Polyamide-imide, % | | 59 | 53 | 47 | 55 |
| Polyetherimide, % | | - | 6 | 12 | 14 |
| Glass Fibers PPG 3540, % | | 40 | 40 | 40 | - |
| Graphite Fibers AS1810, % | | - | - | - | 30 |
| PTFE, % | | 1 | 1 | 1 | 1 |
| Blend Ratio PAI/PEI | | 100/0 | 90/10 | 80/20 | 80/20 |
| Physical Properties | | | | | |
| Tensile Strength | | | | | |
| As-Molded | MPa | 74.5 | 143.5 | 135.9 | 150.4 |
| | ($X10^3$PSI) | (10.8) | (20.8) | (19.7) | (21.8) |
| Cured @ 500°F* | MPa | 200.1 | 229.8 | 225.6 | 262.2 |
| | ($X10^3$PSI) | (29.0) | (33.3) | (32.7) | (38.0) |
| Tensile Elongation, % | | | | | |
| As-Molded | | 2.0 | 3.2 | 3.0 | 6.2 |
| Cured @ 500°F | | 6.0 | 7.2 | 6.9 | 8.8 |
| Flexural Modulus | | | | | |
| As-Molded | $X10^3$MPa | 14.5 | 13.8 | 13.8 | 17.9 |
| | ($X10^6$PSI) | ( 2.1) | ( 2.0) | ( 2.0) | ( 2.59) |
| Cured @ 500°F | $X10^3$MPa | 13.8 | 13.1 | 13.1 | 17.0 |
| | ($X10^6$PSI) | ( 2.0) | ( 1.9) | ( 1.9) | ( 2.46) |
| Flexural Strength | | | | | |
| As-Molded | MPa | 173.9 | 245.6 | 220.1 | 218.7 |
| | ($X10^3$PSI) | (25.2) | (35.6) | (31.9) | (31.7) |
| Cured @ 500°F | MPa | 354.7 | 387.1 | 370.5 | 391.9 |
| | ($X10^3$PSI) | (51.4) | (56.1) | (53.7) | (56.8) |
| Izod Impact, Notched | | | | | |
| As-Molded | J/m | 53.3 | 85.3 | 79.6 | 48.0 |
| | (ft-lbs/in) | ( 1.0) | ( 1.6) | ( 1.5) | ( 0.9) |
| Cured @ 500°F | J/m | 85.3 | 95.9 | 106.6 | 69.3 |
| | (ft-lbs/in) | ( 1.6) | ( 1.8) | ( 2.0) | ( 1.3) |

Table II (continued)

| | | | | | | |
|---|---|---|---|---|---|---|
| Dart Impact, | | | | | | |
| Cured @ 500°F | Nm | 0.50 | - | 1.12 | - |
| | (in-lbs) | ( 4.5) | | (10.5) | - |
| HDT | | | | | | |
| As-Molded | °C | 260 | 267 | 264 | 257 |
| | (°F) | (500) | (512) | (507) | (494) |
| Cured @ 500°F | °C | 288 | 291 | 289 | 288 |
| | (°F) | (550) | (555) | (552) | (550) |

* 260°C

Polyamide-imide-phthalamide polyetherimide copolymers build their properties during the annealing step such that molded properties are significantly below the annealed properties as shown in Table 3. To build polyamide-imide-phthalamide polyetherimide properties, parts are annealed at temperatures up to about 277° C (530F) but preferably about 260 to about 271° C (about 500 to about 520° F). It is important that the polyamide-imide-phthalamide Tg is maintained above the maximum annealing temperature such that optimum properties can be built during annealing. It is also important that the polyamide-imide-phthalamide Tg is above the maximum annealing temperatures so that part distortion due to stress relaxation does not occur.

Table III

| | As Molded | Annealed at 260°C (500°F) |
|---|---|---|
| Glass Loading, percent | 40 | 40 |
| Injection Molding Temp., | 343°C (650°F) | 343°C (650°F) |
| Physical Properties | | |
| Tensile Strength MPa (psi) | 74.5 (10,800) | 200.1 (29,000) |
| Tensile Elongation, percent | 2.0 | 6.0 |
| Flexural Modulus MPaX$10^3$(psi) | 14.49(2,100,000) | 13.8 (2,000,000) |
| HDT | 260°C (500°F) | 260°C (550°F) |
| Izod Impact J/m | 53.3 | 85.3 |
| (ft-lbs / in. of notch) | ( 1.0 ) | ( 1.6 ) |

After cure, a representative 20 percent polyetherimide neat polyamide-imide-phthalamide copolymer sample had total shrinkage of 1 percent (10 mils per inch) while the control had a shrinkage of 0.8 percent (8 mils per inch).

It should be particularly emphasized that when our polyamide-imide-phthalamide copolymers are blended with polyetherimides, an ideal two-phase system is formed giving two specific glass transition temperatures, one at about 270° C and the other at about 215° C.

Polyamide-imide-phthalamide-polyetherimides coated on sized fillers such as glass fibers give better molding characteristics and improved as-molded properties. Thus polyamide-imide-phthalamide-polyetherimide copolymers, containing about 20 to about 60 percent fillers can be marketed without loss of

the excellent cured thermal properties of our polyamide-imide-phthalamide copolymers.

Cavity pressure measurements are used as quality control checks of polyamide-imide-phthalamide-polyetherimide resin viscosity. Pressure buildup during the filling of an injection molded part is measured at a point in the cavity (ejector pin). This is accomplished by placing a pressure transducer behind the ejector pin and recording the pressure with a chart recorder or other readout device. Cavity pressure normally rises as the mold is being filled and peaks as the molten resin is packed into the cavity. As the resin solidifies, cavity pressure decreases.

We have found that resins that have low cavity pressure process poorly and that spiral flow measurements were not sensitive enough to discriminate between resins in the viscosity range of interest. Low cavity pressures indicate a large pressure drop between injection and cavity pressures. This indicates higher resin viscosities. In the same manner high cavity pressures indicate less pressure change between injection and cavity pressures, suggesting lower resin viscosities.

Amide-imide polymer and copolymer viscosities had been measured by spiral flop determination previous to the implementation of the cavity pressure procedure, see U.S. Patent 4,224,214. Cavity pressure was selected over spiral flow because of its greater sensitivity. The cavity pressure test has been implemented as an amide-imide homopolymer and copolymer quality control procedure. Like spiral flow, cavity pressure is a test that can be done conveniently in a molder's shop.

The injection molding machine was equipped with a horizontally mounted thermoset screw and barrel assembly. The mold was heated with hot oil from a Mokon Model 105-057 heating unit. Cavity pressure was recorded with a Control Process Model 241 recorded. The mold was equipped to handle pressure transducers at the ejector pins located at the gate end of the tensile bar and the gate end of the flex bar before beginning the work. Since it was desirable to make cavity pressure measurements at the dead end of the flex bar, it was necessary to make some modifications in the mold base to accommodate a transducer at this pin position.

Resins were dried in a desiccant hot air circulating oven at 149 °C (300 °F) for at least 16 hours before testing. Moisture in polyamide-imide-phthalamide-polyetherimide system has a very significant effect on the copolymers and their flow properties. Therefore, special care was taken to be sure the samples were properly dried. This drying procedure was used before making flow rate and cavity pressure measurements.

The flow rate procedure was patterned after the standard method described in ASTM D1238. A 335 °C (635 °F) barrel temperature with a 30 minute preheat time was used. This is about the largest set of weights that can be used safely with the standard extrusion plastometer apparatus. A standard 2.096 mm (0.0825 in.) diameter, and a 8.00 mm (0.315 in .) long orifice was used.

Special care was taken to be sure that each flow rate measurement was started when an equivalent volume of resin was in the barrel. Previous rheology work indicated that there is a very large "barrel height" effect on amide-imide copolymers. Each flow rate measurement was initiated while the top of the piston collar was between the two scribe marks on the piston. This precaution is also required by ASTM in method D1238.

Films having a thickness of about 0.0127-0.254mm (0.5 to 10 mils) have been produced from our polyamide-imide-phthalamide-polyetherimide resins. These films have properties as shown in Example 15.

The reinforced polyamide-imide-phthalamide-polyetherimide copolymers may be prepared in various ways. For example, so-called roving endless glass fiber strands are coated with the polyetherimide, disclosed herein, and then are further coated with the polyamic acid melt and subsequently chopped. The chopped fibers or the glass beads coated with polyetherimides may also be mixed with granulated polyamic acid and the resulting mixture melted in a conventional extruder, or alternatively the fibers coated with polyetherimides may be directly introduced into the polyamic acid melt through a suitable inlet in the extruder. Injection molding of the unfilled or glass-filled polyamide-imide-phthalamide-polyetherimide copolymers is accomplished by injecting the copolymers into a mold maintained at a temperature of about 177 °C (350 °F) to about 232 °C (450 °F). In this process, a 15 to 30 second cycle is used with a barrel temperature of about 304 °C (580 °F) to about 354 °C (670 °F). The injection molding conditions are given in Table IV.

Table IV

| | Set Points |
|---|---|
| Cylinder Temperatures, | |
| Nozzle | 343-354°C (650-670°F) |
| Front Zone | 343-354°C (650-670°F) |
| Rear Zone | 338-349°C (640-660°F) |
| Timer, seconds | |
| Clamp Closed (cure) | 18 |
| Injection Hold | 6 |
| Booster (Inj. Hi) | 2 |
| Cycle Delay (open) | 1 |
| High-Low | 2 |
| Injection Pressure MPa (psi) | |
| High | 138 (20,000) |
| Low | 69 (10,000) |
| Machine Settings | |
| Clamp Pressure, tons | Max. |
| Injection Rate | Max. |
| Screw RPM | 50 |
| Feed Setting | As Req'd |
| Cushion | 6.35mm (1/4'') |
| Back Pressure, MPa (psi) | 1.52 (220 ) |
| Mold Temperature, | |
| Stationary | 232°C (450°F) |
| Movable | 232°C (450°F) |
| Hopper Drier | 104°C (220°F) |

The mechanical properties of the unfilled amide-imide copolymers containing polyetherimides (melt compounded) and also the filled polyamide-imide-phthalamide polyetherimide copolymers are given in Table V and it shows that these copolymers have improved cured mechanical properties and excellent thermal properties despite the fact that they contain about 10 to about 40 weight percent of polyetherimide.

Table V

| | | | | | |
|---|---|---|---|---|---|
| Polyamide-imide, % | 96.5 | 87 | 77.5 | 67.5 | 58 |
| Polyetherimide, % | 0 | 9.5 | 19 | 29 | 38.5 |
| $TiO_2$, % | 3.0 | 3.0 | 3.0 | 3.0 | 3.0 |
| PTFE, % | 0.5 | 0.5 | 0.5 | 0.5 | 0.5 |
| Glass Fibers | | | | | |
| PPG 3540, % | - | - | - | - | - |
| Blend Ratio | 100/0 | 90/10 | 80/20 | 70/30 | 60/40 |
| Tensile Strength | | | | | |
| MPa | 114.5 | 164.2 | 157.3 | 149.0 | 136.6 |
| ($X10^3$PSI) | (16.6) | (23.8) | (22.8) | (21.6) | (19.8) |
| Tensile Elongation, % | 5.8 | 8.2 | 9.2 | 10.0 | 9.3 |
| Flexural Strength | | | | | |
| MPa | - | 216.7 | 216.7 | 209.8 | 217.4 |
| ($X10^3$PSI) | - | (31.4) | (31.4) | (30.4) | (31.5) |
| Flexural Modulus | | | | | |
| MPa$X10^3$ | 5.8 | 4.5 | 4.3 | 4.1 | 3.7 |
| ($X10^6$PSI) | ( 0.84) | ( 0.65) | ( 0.63) | ( 0.59) | ( 0.54) |
| Izod Impact, Notched J/m | 21.3 | 42.6 | 69.3 | 80.0 | 64.0 |
| (ft-lbs/in) | | | | | |
| (in. of notch) | (0.4) | (0.8) | (1.3) | (1.5) | (1.2) |
| Dart Impact, Nm | .22 | - | 2.49 | - | - |
| (in.-lbs) | ( 2.0) | - | (22.6) | - | - |
| HDT °C | 289 | 295 | 282 | 283 | - |
| (°F) | (553) | (563) | (540) | (542) | - |
| Flexural Strength | | | | | |
| @ 204°C (400°F) MPa | 171.1 | - | - | 129.7 | - |
| ($X10^3$PSI) | (24.8) | - | - | (18.8) | - |
| Total Shrinkage % | 0.8 | 1.0 | 1.0 | 1.0 | * 1.75 |
| (mils/in) | ( 8.0) | (10.0) | (10.0) | (10.0) | *(17.5) |

Neat samples were cured @ 268°C (515F); the fiber filled samples cured @ 260°C (500°F).

* Sample distorted when cured @ 268°C (515°F)

Table V (continued)

| | | | |
|---|---|---|---|
| Polyamide-imide, % | 59 | 53 | 47 |
| Polyetherimide, % | - | 6 | 12 |
| $TiO_2$, % | - | - | - |
| PTFE, % | 1 | 1 | 1 |
| Glass Fibers | | | |
| PPG 3540, % | 40 | 40 | 40 |
| Blend Ratio | 100/0 | 90/10 | 80/20 |
| Tensile Strength | | | |
| MPa | 200.1 | 229.8 | 225.6 |
| ($X10^3$PSI) | (29.0) | (33.3) | (32.7) |
| Tensile Elongation, % | 6.0 | 7.2 | 6.9 |
| Flexural Strength | | | |
| MPa | 354.7 | 387.1 | 370.5 |
| ($X10^3$PSI) | (51.4) | (56.1) | (53.7) |
| Flexural Modulus | | | |
| MPa$X10^3$ | 13.8 | 13.1 | 13.1 |
| ($X10^6$PSI) | ( 2.0) | ( 1.9) | ( 1.9) |
| Izod Impact, J/m | 85.3 | 95.9 | 106.6 |
| (ft-lbs/in) | | | |
| (in. of notch ) | ( 1.6) | ( 1.8) | ( 2.0) |
| Dart Impact, Nm | 0.5 | - | 1.2 |
| (in-lbs) | ( 4.5) | - | (10.5) |
| HDT, °C | 288 | 291 | 289 |
| (°F) | (550) | (555) | (552) |
| Flexural Strength | | | |
| @ 204°C (400°F) MPa | 249.1 | 275.3 | 245.0 |
| ($X10^3$PSI) | (36.1) | (39.9) | (35.5) |
| Total Shrinkage % | 0.1 | 0.1 | 0.1 |
| (mils/in) | (1.0) | (1.0) | (1.0) |

Neat samples were cured @ 268°C (515°F); the fiber filled samples cured @ 260°C (500°F).

All of the materials studied were molded on the 10 oz. Stokes injection molder under Table IV molding conditions unless specified otherwise. A 10 oz. Stokes injection molder is fitted with a 1:1 compression thermoset screw which can hold approximately 365 grams of the polyamide-imide-phthalamide-polyetherimide copolymer (approximately 0.8 lbs). Since each test tree weighs approximately 23 grams (neat parts) only 1/16th of the complete injection stroke (shot volume) is used during the molding evaluation. Under these conditions (18 second clamp), the total time the copolymer is trapped in the barrel is approximately 7.2 minutes (total cycle is 27 seconds). This does not mean that the copolymer is in the melt state for the complete 7.2 minutes due to the temperature gradient (front to rear) in the barrel. For a

complete material transition (purge) 16-20 shots must be taken before collecting data.

Polyamide-imide-phthalamide-polyetherimide copolymer flow, under molding conditions, is determined by its cavity pressure which is measured at a point farthest from the sprue. In this test, a pressure transducer is fitted behind a knockout point located behind the flex bar. The higher the cavity pressure, the better the flow thus making for easier mold filling. To determine our polyamide-imide-phthalamide-polyetherimide copolymer reactivity a plot of cavity pressure vs. cycle time is drawn. A stable or non-reactive resin will exhibit good flow characteristics under adverse molding conditions resulting in a melt insensitive to a change in cycle time. A reactive copolymer will be cycle time dependent in that its viscosity increases with cycle time. This is illustrated by a steep negative cavity pressure slope. Polyamide-imide-phthalamide-polyetherimide copolymer samples were all dried for approximately 16 hours at about 300 ° F in a hot air circulating oven containing a suitable desiccant. Polyamide-imide-phthalamide-polyetherimides were dried overnight in a vacuum oven at 110 ° C(230 ° F). Samples were dry blended together and stored under vacuum in sealed containers.

Polyamide-imide-phthalamide-polyetherimide copolymer samples were cured in a Blue M hot air programmable oven under a 7-day cycle with 1-day at 160 ° C (320 ° F), 204 ° C (400 ° F), 232 ° C (450 ° F), 246 ° C (475 ° F) and 3 days at 260 ° C (500 ° F). Several tensile bars were cured under a 7-day cycle with 3 days at 268 ° C (515 ° F).

The following examples illustrate the preferred embodiment of the invention. It will be understood that the examples are for illustrative purposes only and do not purport to be wholly definitive with respect to conditions or scope of the invention.

## EXAMPLE I

A 3.8 l (10-gal), glass-lined Pfaudler kettle equipped with a water-cooled jacket and nitrogen inlet was charged with 4.48 kg (9.87 lbs) of m-phenylenediamine, 0.159 kg (0.35 lbs) of trimellitic anhydride and 26.9 kg (59.2 lbs) of N-methylpyrrolidone. After solution had occurred under a nitrogen purge, an intimate blend of 4.32 kg (9.52 lbs) of 4-trimellitoyl anhydride chloride and 4.16 kg (9.17 lbs) of isophthaloyl dichloride was added over 2.5 hrs keeping the temperature below 35 ° C. The resulting viscous solution was brought to 50 ° C. When the Gardner viscosity had reached a Z3 viscosity the solution was precipitated by passage through a Fitzpatrick comminuting mill. The polymer product was washed five times with deionized water followed by air-drying on a filter for 3 days. The product was then brought to a solids content of 98.3 per cent by heating in a forced air oven for 2 hrs at 470°C.

## EXAMPLE II

Metaphenylenediamine (540 g) and acetic acid (900 ml) were placed in a five-liter, three-necked, round bottom flask, equipped with mechanical stirrer, pressure equalizing addition funnel and nitrogen sparge tube, and distillation head and condenser. The nitrogen sparge was set at 300 cc/min and 765 g of acetic anhydride were added over 5 min. This was followed by the addition of 415 g of isophthalic acid and 480 g of trimellitic anhydride. The temperature of the bottom half of the spherical heating mantle surrounding the flask was set at 371 ° C(700 ° F) and the top half of the mantle was heated with a Variac set at 50. After 105 min, 1730 ml of distillate were collected and the polymer had become very viscous. The heat was turned off and the polymer was cooled under nitrogen.

## EXAMPLE III

A solution consisting of 533.3 grams of NMP, 300 grams of DMAC, and 58.0 grams of propylene oxide was stirred and cooled to 8°C. A mixture of 168.5 grams of 4-TMAC, 80.1 grams of OBA, and 79.3 grams of MBA was then added to the solvent over a period of 50 minutes. During this time the reaction was allowed to warm to 36°C. An additional 66.7 grams of NMP were added to wash in all solids, then the reaction mixture was heated to 50°C and held at that temperature for 3 1/2 hours. The solution was then filtered.

## EXAMPLE IV

A 3.8 l (10-gal) glass-lined Pfaudler kettle equipped with a water-cooled jacket and nitrogen inlet was charged with 4.48 kg (9.87 lbs) of m-phenylenediamine, 0.159 kg (0.35 lbs) of trimellitic anhydride and 26.9 kg (59.2 lbs) of N-methylpyrrolidone. After solution had occurred under nitrogen purge, an intimate blend of 4.32kg (9.52 lbs) of 4-trimellitoyl anhydride chloride and 4.16kg (9.17 lbs) of isophthaloyl dichloride was

added over 2.5 hrs keeping the temperature below 35° C. The resulting viscous solution was brought to 50°C. When the Gardner viscosity had reached a Z1 viscosity the solution was precipitated by passage through a Fitzpatrick comminuting mill. The polymer product was washed five times with deionized water followed by air-drying on a filter for 3 days. The product was then brought to a solids content of >98% by heating in a forced air oven for 2 hours at 243°C (470°C).

EXAMPLE V

A round-bottom, 2000-ml, 4-necked flask was charged with 1045 g dry N-methylpyrrolidone (NMP), 16.2 g (1.5 mol) m-phenylenediamine (MPDA), and 4.3 g trimellitic anhydride (TMA) (0.0225 mol). The flask was equipped with a mechanical stirrer, nitrogen inlet tube, themometer, and a liquid addition funnel. During solution of the diamine and TMA, the additional funnel was charged with 248.0 g (1.178 mol) 4-trimellitoyl anhydride chloride (4-TMAC) and 60.9 g (0.30 mol) isophthaloyl dichloride ($IPCl_2$) and melted at 80°C. When melting was complete, the solution of acid chlorides was added to the diamine/TMA solution over a 2-hour period at 25-35°C. After addition was complete the viscous solution was heated to 50°C and held for 1 hour.

EXAMPLE VI

A polyamide-imide-phthalamide copolymer was, dry blended with various amounts of a polyetherimide and then the blend was melt homogenized in a Brabender mixing head for 6 minutes at a mixing speed of 47 rpm. The stock temperature was set at 340°C and torque and melt temperature were measured after 6 minutes of mixing. Table VI summarizes the preparation conditions. Note that a steady decrease in torque and melt temperature occurs with increasing concentrations of polyetherimide up to ca. 60%. At higher polyetherimide concentrations, both torque and melt temperature remain relatively constant, the latter at the stock temperature of 340°C. An apparent maximum in torque temperature occurs at the 90/10 polyamide-imide-phthalamide copolymer/polyetherimide composition and cannot be explained.

Glass transition temperatures and ΔCp's were determined on the Omnitherm QC25 thermal analyzer. The calibration of the instrument was checked periodically over the time span that the samples were run. Five such calibration checks yielded an estimated precision of ± 1° C in Tg's and ± 3% in the ΔCp's.

**Table VI**

**Polyamide-Imide-Phthalamide Copolymer/Polyetherimide Blends: Preparation Conditions Using Brabender Mixing Head**

| Blend Composition PAI/PEI | Melt Temperature, °C | Torque, Newton-Meter |
|---|---|---|
| 100/0 | 352 | 36 |
| 95/5 | 354 | 44 |
| 90/10 | 354 | 54 |
| 80/20 | 350 | 40 |
| 70/30 | 344 | 33 |
| 60/40 | 345 | 25 |
| 50/50 | 345 | 24 |
| 40/60 | 342 | 18 |
| 30/70 | 341 | 17 |
| 20/80 | 341 | 16 |
| 10/90 | 340 | 17 |
| 0/100 | 340 | 15 |

Stock Temperature = 340°C
Mixing Speed = 47 RPM

In this and the following Examples the polyamide-imide-phthalimide copolymer used was that described in Example IV. The polyetherimide used was Ultem 1000, man. General Electric Company.

TABLE VII

Polyamide-Imide-Phthalamide Copolymer/ Polyetherimide Blends-Thermal Results

| | Tg, °C | | ΔCp, Cal/gm Deg | |
|---|---|---|---|---|
| % PEI | PEI | PAI | PEI | PAI |
| 0 | - | 273 | - | .0931 |
| 5 | ND | 274 | ND | .0879 |
| 10 | 209 | 274 | .0037 | .0849 |
| 20 | 209 | 275 | .01095 | .0734 |
| 30 | 212 | 275 | .01995 | .0675 |
| 40 | 214 | 278 | .0252 | .0524 |
| 50 | 216 | 279 | .0309 | .0454 |
| 60 | 215 | 280 | .0367 | .0358 |
| 70 | 215 | 282 | .0469 | .0225 |
| 80 | 216 | 284 | .0479 | .0144 |
| 90 | 215 | 289 | .0591 | .0047 |
| 100 | 217 | - | .0606 | - |

ND: Present, but too small to measure

TABLE VIII

Comparison of Melt-Prepared and Solution-Prepared Thermal Properties

| | Tg PEI, °C | | Tg PAI, °C | |
|---|---|---|---|---|
| % PEI | Melt | Soln | Melt | Soln |
| 0 | - | - | 273 | 285 |
| 30 | 212 | 210 | 276 | 275 |
| 50 | 216 | 215 | 279 | 280 |
| 70 | 215 | 216 | 282 | 278 |
| 90 | 215 | 218 | 289 | 273 |
| 100 | 217 | 217 | - | - |

PEI: Polyetherimide - Ultem 1000 (Trade Mark) - General Electric Company

PAI: Polyamide-imide-phthalamide copolymer prepared as shown in Example IV.

The above results indicate that the polyamide-imide-phthalamide copolymers are not miscible with the polyetherimide since two distinct glass transition (Tg) temperatures were observed, one Tg for each component. Solution blends of the polyamide-imide-phthalamide copolymers with polyetherimide were prepared in N-methyl-2-pyrrolidone at ca. 80-100 °C. The samples were then precipitated out, using $H_2O$, washed, filtered and dried at 150 °C for several days under vacuum. Similar results were obtained where a two-phase, non- miscible blend was observed (more than one blend Tg). These solution and melt blends of a polyamide-imide-phthalamide copolymer and polyetherimide form an ideal two-phase system while those

reported in U.S. Patent 4,258,155 where a single-phase system was observed do not.

EXAMPLE VII

Neat polyamide-imide-phthalamide copolymer polyetherimide blends can be prepared by physically blending the constituents together, either pellet to pellet, powder to powder, powder to pellet, or pellet to powder with or without a compounding step prior to injection molding or film extruding. It is preferred that the constituents are melt compounded, especially via a twin screw extruder.

The filled polyamide-imide-phthalamide copolymer polyetherimide blends can be prepared as described above or the polyetherimide can be dissolved in a solvent and spray coated or dip coated on the filler and/or reinforcement (graphite fibers, glass fibers, and mineral fillers).

EXAMPLE VIII

When polyamide-imide-phthalamide copolymers are fiber filled and then injection molded into parts that have cross-sections greater than 6.35 mm (250 mils), internal part cracking becomes a problem. It is believed that the low as-molded (prior to curing) strength and toughness of the polyamide-imide-phthalamide copolymers cannot resist the cool down stresses during molding resulting in parts which have internal cracks. Thus the parts are not commercially useable. We have found that by alloying (blending) up to 40 % by polymer weight of polyetherimide with the polyamide-imide-phthalamide copolymers as-molded strength and toughness properties are substantially improved and that thicker wall parts can be molded crack-free. The preferred blending ratio is 80/20 polyamide-imide-phthalamide copolymer/polyetherimide. These alloys can be cured to temperatures up to 260 °C (500 °F) and during the curing step the alloy increases its mechanical and thermal properties.

| | Polyamide-imide-phthalamide Copolymer | | |
|---|---|---|---|
| Polyamide-imide, % | 0 | 10 | 20 |
| Glass Fibers PPG 3540, % | 40 | 40 | 40 |
| As-Molded Properties | | | |
| Tensile Strength MPa | 74.5 | 143.5 | 135.9 |
| (psi) | (10,800) | (20,800) | (19,700) |
| Tensile Elongation, % | 2.0 | 3.2 | 3.0 |
| Izod Impact J/m | 53.3 | 85.3 | 80.0 |
| (ft-lbs / in. of notch) | (1.0) | (1.6) | (1.5) |
| Molding thickness (% Crack-free parts) | | | |
| 101.6mm x 12.7mm (4" x 0.5 ") Disk | 0 | 10 | 90 |
| 139.7mm x 10.9mm (5.5" x 0.43") Disk | 0 | - | 95 |
| Cured Properties* | | | |
| Tensile Strength MPa | 200.1 | 229.8 | 225.6 |
| (psi) | (29,000) | (33,300) | (32,700) |
| Tensile Elongation, % | 6.0 | 7.2 | 6.9 |
| Izod J/m | 85.3 | 95.9 | 106.6 |
| (ft-lbs / in. of notch) | (1.6) | (1.8) | (2.0) |
| Dart Impact Nm, | 0.5 | - | 1.2 |
| (in-lbs) | (4.5) | - | (10.5) |
| HDT °C | 288 | 291 | 289 |
| (°F) | (550) | (555) | (552) |

* Samples cured @ 260°C (500°F)

## EXAMPLE IX

With successful alloys, the property profile is either additive or synergistic, whereas with incompatible (undesirable) blend systems, the observed properties are lower than either polymer component. An ideal alloy would be one whose property profile is synergistic where the alloy exhibits properties superior to either polymer component.

The polyamide-imide-phthalamide polyetherimide copolymer blends are ideal two-phase systems since they exhibit a synergistic strength profile trend where the tensile strengths of the alloy are greater than either of its polymer blend components. For example, the tensile strength of polyetherimide and polyamide-imide-phthalamide copolymers are less than 117.3MPa(17,000 psi) while the 90/10, 80/20, 70/30 and 60/40 blends of the polyamide-imide-phthalamide/polyetherimide have tensile strengths of 164.2, 157.3, 149.0 and 136.6 MPa (23,800, 22,800, 21,600 and 19,800 psi) respectively.

This synergistic property profile trend is novel to the polyamide-imide-phthalamide/polyetherimide blends and different from other polyamide-imides that are blended with polyetherimide. These other polyamide-imide/polyetherimide blends have tensile strengths which lie between the polyamide-imide and the polyetherimide and can be estimated by the laws of mixtures.

This difference in property response between the polyamide-imides alloyed with polyetherimide

illustrates that not all amide-imides behave the same when blended with the same secondary polymer components.

EXAMPLE X

Neat polyamide-imide-phthalamide copolymer parts are extremely brittle and tend to crack or shatter during the ejection sequence of an injection molding run. This problem of cracking and shattering is reduced when the neat polyamide-imide-phthalamide copolymers are alloyed with polyetherimide. These alloys have improved strength and toughness allowing the alloy to withstand the ejection force of the knockout pins. The neat polyamide-imide-phthalamide copolymers have good flow properties at temperatures at and above 343°C (650°F) and at ejection molding shear conditions. These polyamide-imide-phthalamide copolymers are thus alloyed to build properties and to improve the crack resistance of the copolymer.

EXAMPLE XI

Polyamide-imide-phthalamide polyetherimide copolymer films can be fabricated on a single or twin screw extruder that have thickness in the 0.013-0.25mm (0.5-10 mil) range. These copolymer alloys can also be extruded into thicker extrudates such as ribbons and sheets. An 80/20 polyamide-imide-phthalamide copolymer/polyetherimide blend film was extruded on a Werner Pfleider ZSK-30 twin screw extruder and films from 0.025-0.25mm (1.0-10 mils) were collected. This polyamide-imide-phthalamide alloy has good melt ductility characteristics allowing the hot melt to be drawn into a thin film. To illustrate the drawability of the alloy, samples were collected at take-off speeds as high as 21.3m/min(70 ft/min)(machine limit) resulting in a highly oriented 0.038 mm (1.5 mil) film. The uncured films were resilient and could be creased in the transverse direction without tearing or shattering. The films were also translucent and cherry red in color and did not delaminate. Each of the films was cured at 208°C (515°F) without stress relaxing and micro-tensile tiers were die cut without any difficulty.
See the table below for film properties.

80/20 Polyamide-Imide-Phthalamide Copolymer Polyetherimide Blend

| | | | | |
|---|---|---|---|---|
| Film Thickness mm | 0.025 | 0.051 | 0.102 | 0.127 |
| (mil) | (1) | (2) | (4) | (5) |
| Physical Properties | | | | |
| Yield Tensile Strength: | | | | |
| MD MPa | 136.6 | 113.3 | 122.1 | None |
| (psi) | (19,800) | (16,420) | (17,690) | None |
| TD MPa | 130.7 | None | None | 129.7 |
| (psi) | (18,940) | None | None | (18,800) |
| Break Tensile Strength: | | | | |
| MD MPa | 134.6 | 106.1 | 114.1 | 134.8 |
| (psi) | (19,500) | (15,370) | (16,530) | (19,540) |
| TD MPa | 129.0 | 95.4 | 107.2 | 126.9 |
| (psi) | (18,700) | (13,820) | (15,540) | (18,390) |
| Yield Tensile Elongation % | | | | |
| MD | 9.8 | 9.8 | 9.7 | None |
| TD | 9.2 | None | None | 7.6 |
| Break Tensile Elongation % | | | | |
| MD | 14.4 | 15.1 | 12.1 | 10.1 |
| TD | 13.2 | 7.8 | 6.8 | 9.6 |
| Tensile Modulus | | | | |
| MD MPa X10$^3$ | 2.842 | 2.382 | 2.766 | 2.939 |
| (psi) | (411,900) | (345,200) | (400,800) | (425,900) |
| TD MPa X10$^3$ | 2.777 | 2.679 | 2.836 | 3.232 |
| (psi) | (402,500) | (388,200) | (411,000) | (468,400) |

## Claims

1. A polymeric blend comprising (i) from 10 to 40 weight per cent of a polyetherimide and (ii) from 90 to 60 weight per cent of an amide-imide-phthalamide copolymer having recurring polyamide A units of:

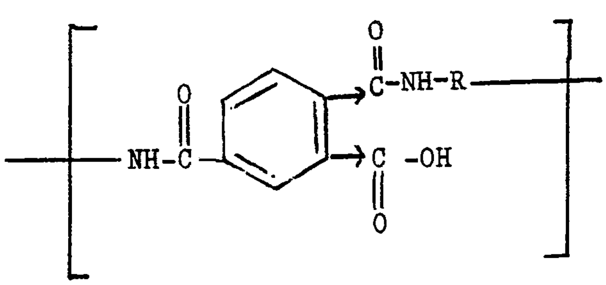

which are capable of undergoing imidization, and polyamide B units of:

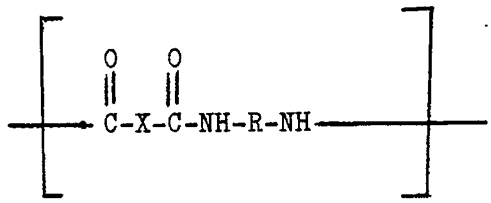

wherein the molar ratio of A units to B units is about 1:1,

wherein each R which may be the same or different is a divalent aromatic hydrocarbon radical and wherein X is a divalent aromatic radical and → denotes isomerization.

2. A polymeric blend comprising (i) from 10 to 40 weight per cent of a polyetherimide and (ii) from 90 to 60 weight per cent of an amide-imide-phthalamide copolymer having recurring polyamide-imide A' units of:

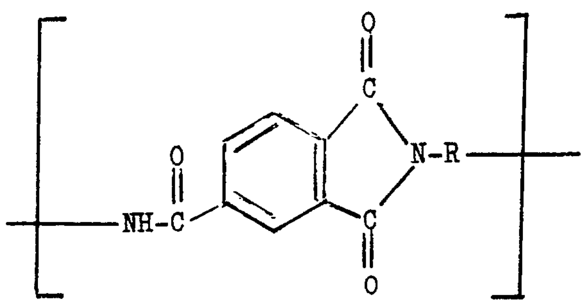

and polyamide B units of:

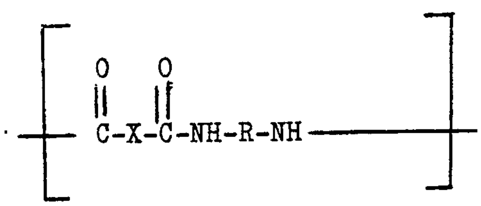

wherein the molar ratio of A' to B units is about 1:1,
wherein each R which may be the same or different is a divalent hydrocarbon radical and X is a divalent aromatic radical.

3. A blend according to Claim 1 or Claim 2 wherein said R groups are selected from divalent hydrocarbon radicals of from 6 to 20 carbon atoms or two divalent hydrocarbon radicals joined directly or by stable linkages selected from -O-, methylene, -CO- and $SO_2$-.

4. A blend according to any one of Claims 1 to 3 wherein X is:

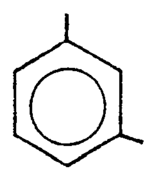

5. A blend according to any one of Claims 1 to 3 wherein X is:

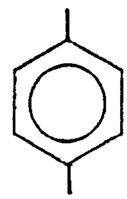

6. A blend according to any preceding claim wherein the polyetherimide comprises repeating units of formula:

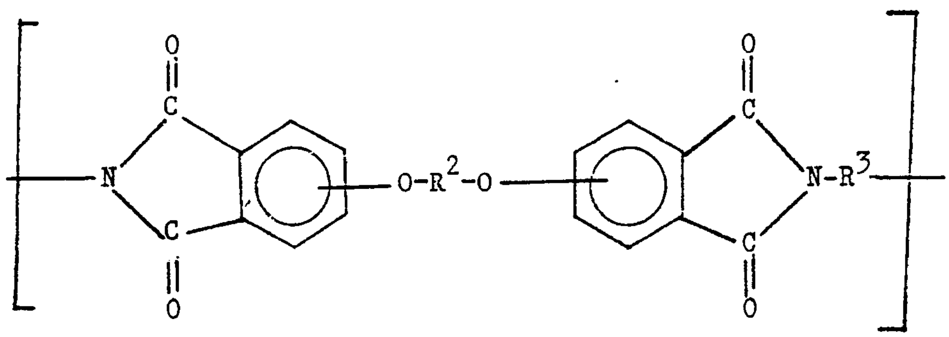

wherein $R^2$ and $R^3$ are divalent organic radicals.

7. A blend according to Claim 6 wherein $R^2$ and $R^3$ are divalent aromatic radicals.

8. A blend according to Claim 6 or Claim 7 wherein $R^2$ consists of two or more substituted or unsubstituted aromatic radicals joined directly or via linkages selected from -O-, -CO-, $-SO_2-$, -S- and $-C_xH_{2x}-$ wherein x is from 1 to 5.

9. A blend according to any of claims 1 to 5 wherein the polyetherimide comprises chemically combined recurring units of the following structures:

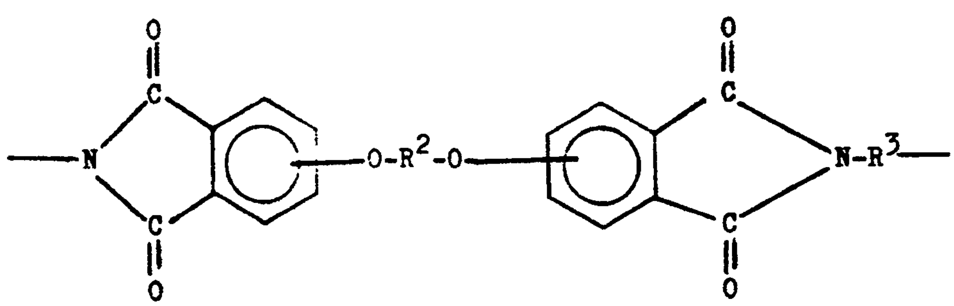

wherein $R^2$ is a member selected from (a) the following divalent organic radicals:

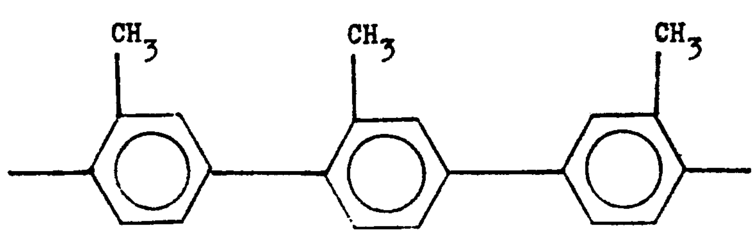

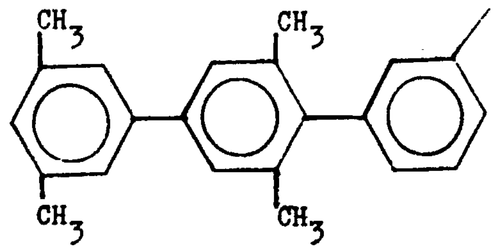

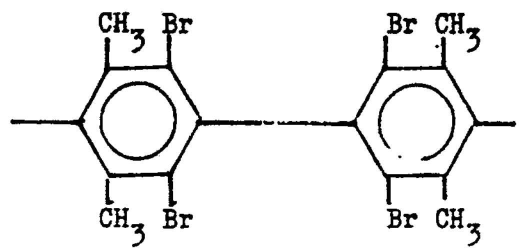

and 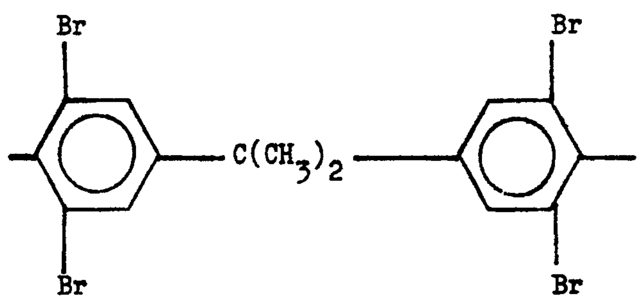

and (b) divalent organic radicals of the general formula:

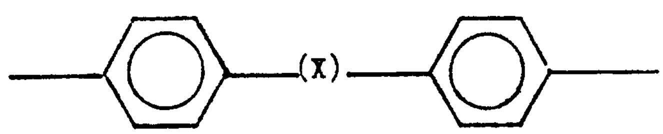

where x is $-C_yH_{2y}-$ wherein y is from 1 to 5, inclusive and $R^3$ is a divalent organic radical selected from (a) aromatic hydrocarbon radicals having from 6-20 carbon atoms and halogenated derivatives thereof, (b) alkylene radicals and cycloalkylene radicals having from 2-20 carbon atoms, (c) $C_{(2\text{-}8)}$ alkylene terminated polydiorganosiloxanes, and (d) divalent radicals included by the formula:

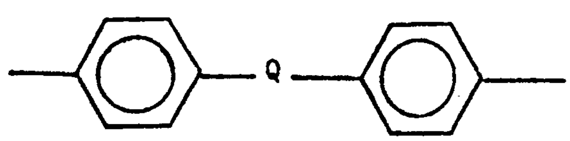

where Q is a member selected from:

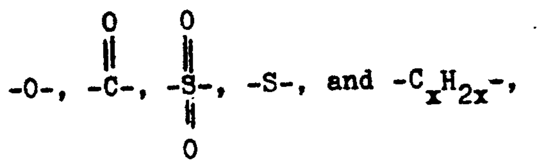

and x is from 1 to 5.

**10.** A composition according to any of Claim 6 to 9 wherein $R^2$ is of the formula:

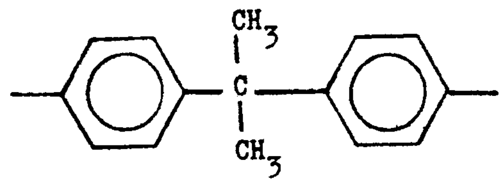

**11.** A composition according to any of Claims 6 to 10 wherein $R^3$ is m-phenylene.

**12.** A composition according to any of Claims 1 to 5 wherein the polyetherimide comprises repeating units of the following formula:

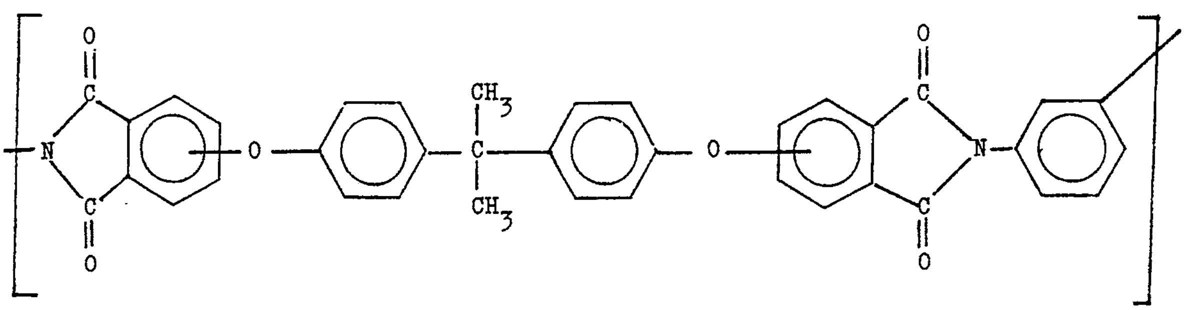

**13.** A blend according to any preceding claim in combination with a filler, said filler comprising about 10 to about 80 weight per cent of the total combination.

**14.** A blend according to Claim 13 wherein said filler is selected from glass fibers, glass beads and graphite.

**15.** A molded article formed from a blend according to any preceding claim.

**16.** A film having a thickness of 0.013 to 0.25 mm (0.5 to 10 mils) formed from a blend according to any of Claims 1 to 12.

**17.** A process to improve the thick-wall molding performance, the as-molded strength and toughness properties of an amide-imide-phthalamide copolymer having recurring A' units of:

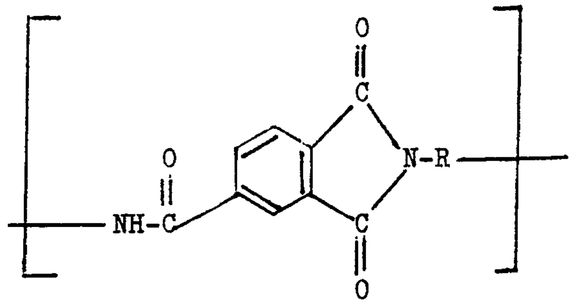

and polyamide B units of:

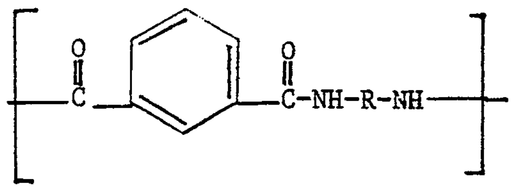

wherein the molar ratio of A' to B units is about 1:1 and each R which may be the same or different is a divalent hydrocarbon radical of from 6 to 20 carbon atoms or two divalent hydrocarbons joined directly or by stable linkages selected from the group consisting of --O--, methylene, --CO--, and --$SO_2$--, said process comprising blending said copolymer with an mount of a polyetherimide to provide 10 to 40% by weight of said polyetherimide in the blend.

**18.** A process according to Claim 17 wherein said amide-imide-phthalamide copolymer and polyetherimide as defined in any of Claims 1 to 12.

**Revendications**

**1.** Un mélange polymère comprenant (i) de 10 à 40 % en poids d'un polyétherimide et (ii) de 90 à 60 % en poids d'une copolymère d'amide-imide-phtalamide ayant des motifs répétés de polyamide A :

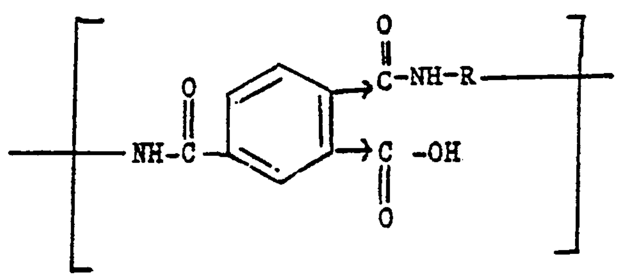

qui sont capables de subir une imidation, et des motifs de polyamide B :

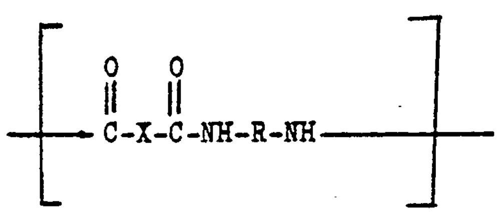

où le rapport molaire des motifs A aux motifs B est d'environ 1/1,

où chacun des radicaux R, qui peuvent être semblables ou différents, est un radical hydrocarboné

aromatique divalent et où X est un radical aromatique divalent et → indique une isomérisation.

2. Un mélange polymère comprenant (i) de 10 à 40 % en poids d'un polyétherimide et (ii) de 90 à 60 % en poids d'un copolymère d'amide-imide-phtalamide ayant des motifs répétés de polyamide-imide A' :

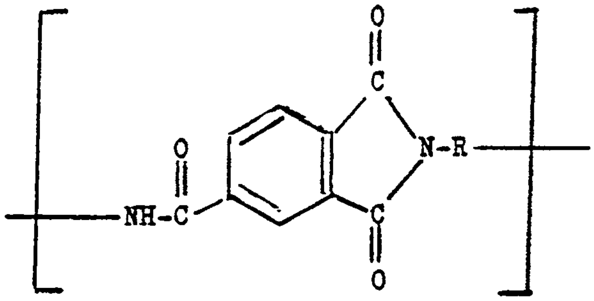

et des motifs de polyamide B :

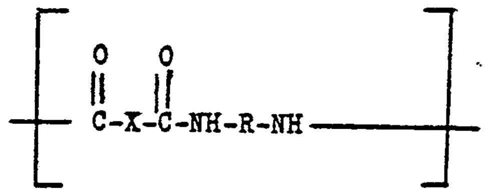

où le rapport molaire des motifs A' au motifs B est d'environ 1/1,

où chacun des radicaux R, qui peuvent être semblables ou différents, est un radical hydrocarboné divalent et où X est un radical aromatique divalent.

3. Un mélange selon la revendication 1 ou la revendication 2, où lesdits radicaux R sont choisis parmi les radicaux hydrocarbonés divalents de 6 à 20 atomes de carbone ou sont deux radicaux hydrocarbonés divalents unis directement ou par des liaisons stables choisies parmi -O-, méthylène, -CO- et $-SO_2-$.

4. Un mélange selon l'une quelconque des revendications 1 à 3, où X est :

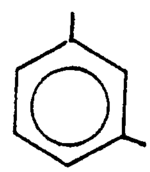

5. Un mélange selon l'une quelconque des revendications 1 à 3, où X est :

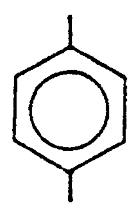

6. Un mélange selon l'une quelconque des revendications précédentes, où le polyétherimide comprend des motifs répétés de formule :

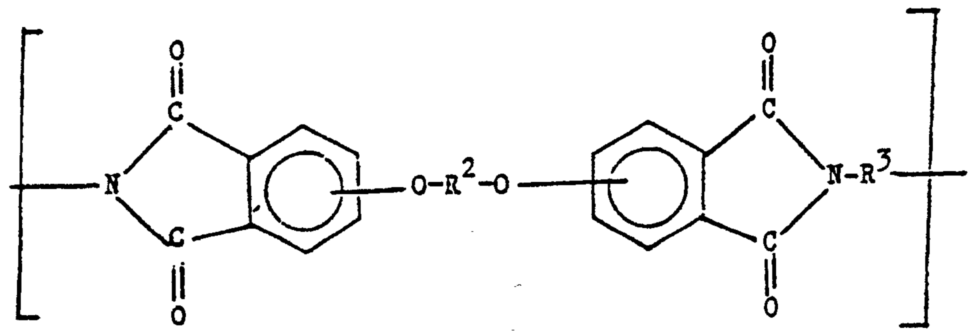

dans laquelle $R^2$ et $R^3$ sont des radicaux organiques divalents.

7. Un mélange selon la revendication 6, dans lequel $R^2$ et $R^3$ sont des radicaux aromatiques divalents.

8. Un mélange selon la revendication 6 ou la revendication 7, où $R^2$ est constitué de deux ou plus de deux radicaux aromatiques substitués ou non substitués unis directement ou par des liaisons choisies parmi -O-, -C0-, $-SO_2-$, -S- et $-C_xH_{2x}-$ où x vaut de 1 à 5.

9. Un mélange selon l'une quelconque des revendications 1 à 5, où le polyétherimide comprend des motifs répétés combinés chimiquement ayant les structures suivantes :

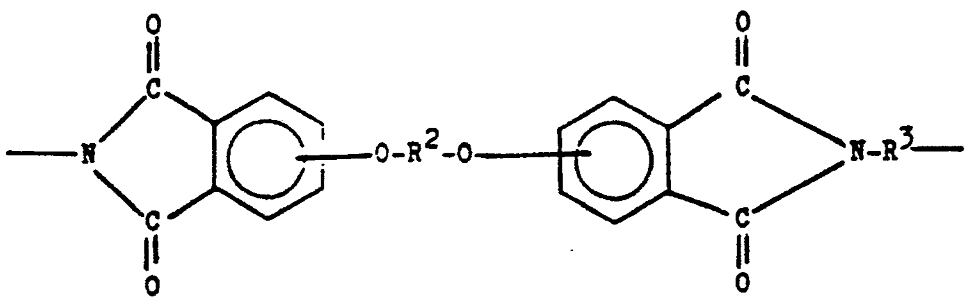

où $R^2$ est choisi parmi (a) les radicaux organiques divalents suivants :

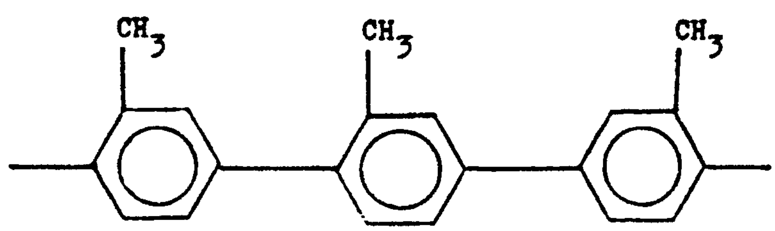

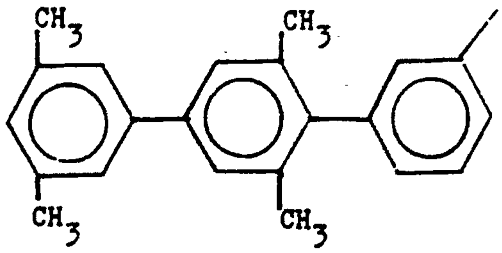

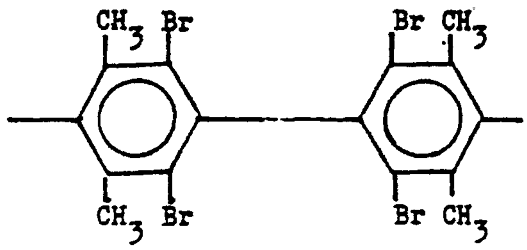

et 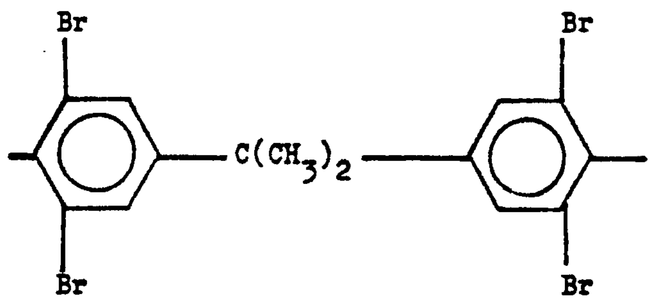

et (b) les radicaux organiques divalents de formule générale

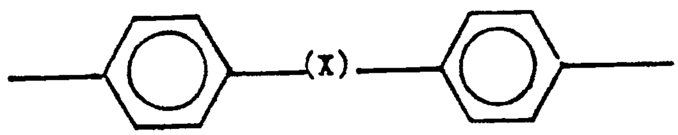

où X est $-C_yH_{2y}-$ où y vaut de 1 à 5 inclusivement et $R^3$ est un radical organique divalent choisi parmi (a) les radicaux hydrocarbonés aromatiques ayant de 6 à 20 atomes de carbone et leurs dérivés halogénés, (b) les radicaux alcoylènes et cycloalcoylènes ayant de 2 à 20 atomes de carbone, (c) les polydiorganosiloxanes à terminaison alcoylène en $C_{(2-8)}$ et (d) les radicaux divalents répondant à la formule :

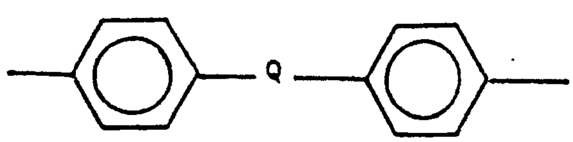

dans laquelle Q est choisi parmi :

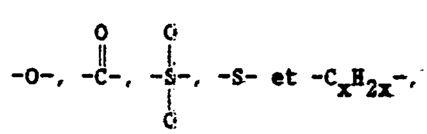

et x vaut de 1 à 5.

**10.** Une composition selon l'une quelconque des revendications 6 à 9, dis laquelle $R^2$ a pour formule

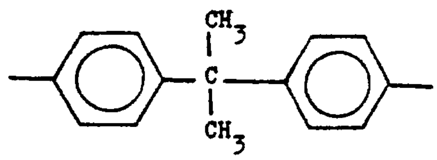

11. Une composition selon l'une quelconque des revendications 6 à 10, dans laquelle $R^3$ est un m-phénylène.

12. Une composition selon l'une quelconque des revendications 1 à 5, dans laquelle le polyétherimide comprend des motifs répétés de formule suivante :

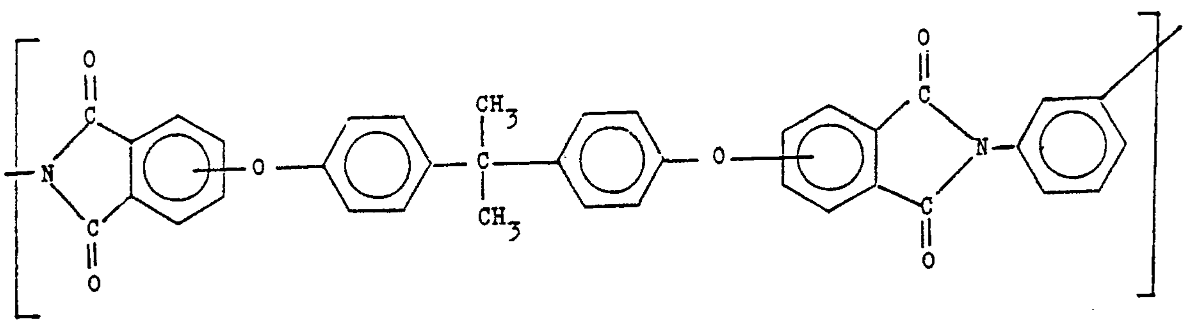

13. Un mélange selon l'une quelconque des revendications précédentes en combinaison avec une charge, ladite charge constituant environ 10 à environ 80 % du poids de la combinaison totale.

14. Un mélange selon la revendication 13, dans lequel ladite charge est choisie parmi les fibres de verre, les perles de verre et le graphite.

15. Un article moulé formé à partir d'un mélange selon l'une quelconque des revendications précédentes.

16. Un film ayant une épaisseur de 0,013 à 0,25 mm (0,5 à 10 mils) formé à partir d'un mélange selon l'une quelconque des revendications 1 à 12.

17. Un procédé pour améliorer les performance de moulage d'articles à paroi épaisse, la résistance mécanique brute de moulage et la ténacité d'un copolymère d'amide-imide-phtalimide ayant des motifs répétés A' :

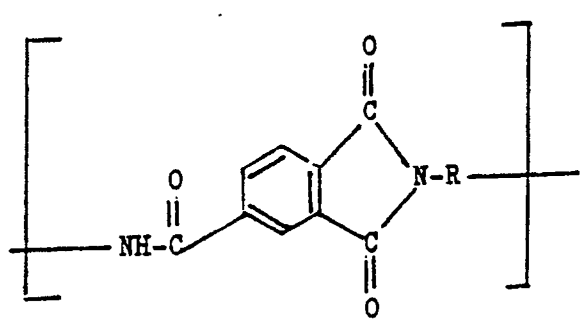

et des motifs de polyamide B :

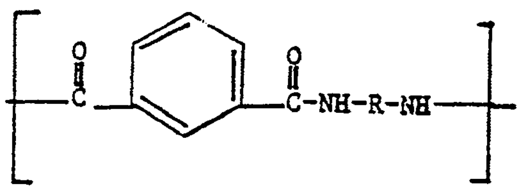

où le rapport molaire des motifs A' aux motifs B est d'environ 1/1 et les radicaux R, qui peuvent être semblables ou différents, sont des radicaux hydrocarbonés divalents de 6 à 20 atomes de carbone ou deux radicaux hydrocarbonés divalents unis directement ou par des liaisons stables choisies dans le groupe constitué par -O-, méthylène, -CO- et $-SO_2-$, ledit procédé comprenant le mélange dudit copolymère avec une quantité d'un polyétherimide telle qu'il y ait 10 à 40 % en poids dudit polyétherimide dans le mélange.

**18.** Un procédé selon la revendication 17, dans lequel ledit copolymère d'amide-imide-phtalimide et ledit polyétherimide sont comme défini dans l'une quelconque des revendications 1 à 12.

**Patentansprüche**

**1.** Polymergemisch, enthaltend (i) 10 bis 40 Gewichtsprozent eines Polyetherimids und (ii) 90 bis 60 Gewichtsprozent eines Amid-Imid-Phthalimid-Copolymerisats mit wiederkehrenden Polyamideinheiten der Formal A

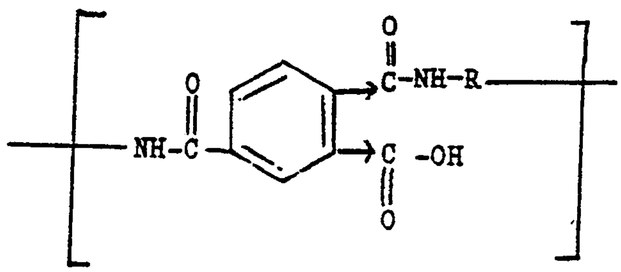

,

die der Imidierung unterliegen können, und Polyamideinheiten der Formel B

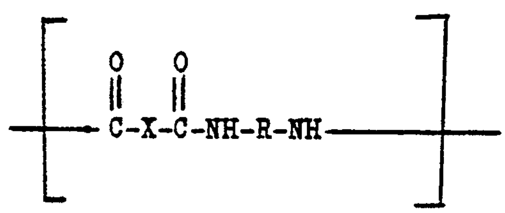

,

wobei das Molverhältnis der Einheiten A zu den Einheiten B etwa 1:1 beträgt,

worin die einzelnen Reste R gleich oder verschieden sein können und einen zweiwertigen aromatischen Kohlenwasserstoffrest bedeuten, X ein zweiwertiger aromatischer Rest ist und die Pfeile eine Isomerisierung bezeichnen.

**2.** Polymergemisch, enthaltend (i) 10 bis 40 Gewichtsprozent eines Polyetherimids und (ii) 90 bis 60 Gewichtsprozent eines Amid-Imid-Phthalimid-Copolymerisats mit wiederkehrenden Polyamid-Imid-Einheiten der Formel A'

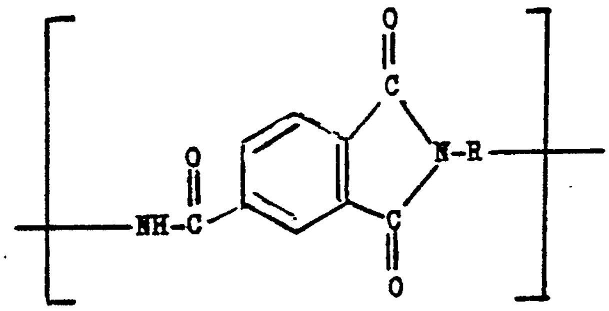

und Polyamideinheiten B

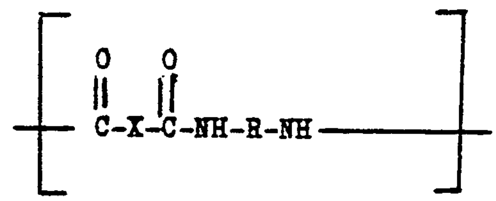

,

wobei das Molverhältnis der Einheiten A' zu den Einheiten B etwa 1:1 beträgt,

worin die einzelnen Reste R gleich oder verschieden sein können und einen zweiwertigen Kohlenwasserstoffrest bedeuten und X ein zweiwertiger aromatischer Rest ist.

3. Gemisch nach Anspruch 1 oder 2, worin die Reste R ausgewählt sind aus zweiwertigen Kohlenwasserstoffresten mit 6 bis 20 Kohlenstoffatomen oder zwei zweiwertigen Kohlenwasserstoffresten, die direkt oder über stabile Brücken miteinander verbunden sind, die ausgewählt sind aus -O-, Methylen, -CO- und $-SO_2-$.

4. Gemisch nach einem der Ansprüche 1 bis 3, worin X folgende Bedeutung hat:

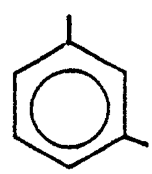

5. Gemisch nach einem der Ansprüche 1 bis 3, worin X folgende Bedeutung hat:

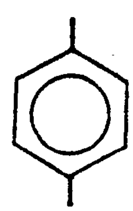

6. Gemisch nach einem der vorhergehenden Ansprüche, worin das Polyetherimid wiederkehrende Einheiten der folgenden Formel aufweist:

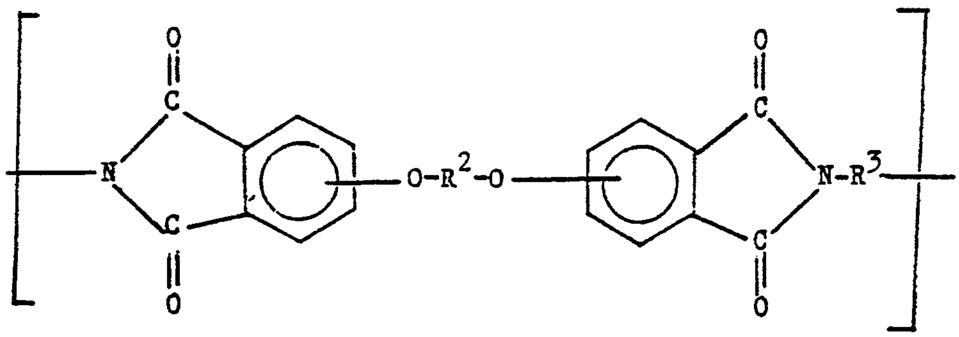

,

worin $R^2$ und $R^3$ zweiwertige organische Reste bedeuten.

7. Gemisch nach Anspruch 6, worin $R^2$ und $R^3$ zweiwertige aromatische Reste sind.

8. Gemisch nach Anspruch 6 oder 7, worin $R^2$ aus zwei oder mehr substituierten oder unsubstituierten aromatischen Resten besteht, die direkt oder über Brücken miteinander verbunden sind, die ausgewählt sind aus -O-, -CO-, $-SO_2-$, -S- und $-C_xH_{2x}-$, worin der Index x eine Zahl von 1 bis 5 bedeutet.

9. Gemisch nach einem der Ansprüche 1 bis 5, worin das Polyetherimid chemisch vereinigte wiederkehrende Einheiten der folgenden Strukturen enthält:

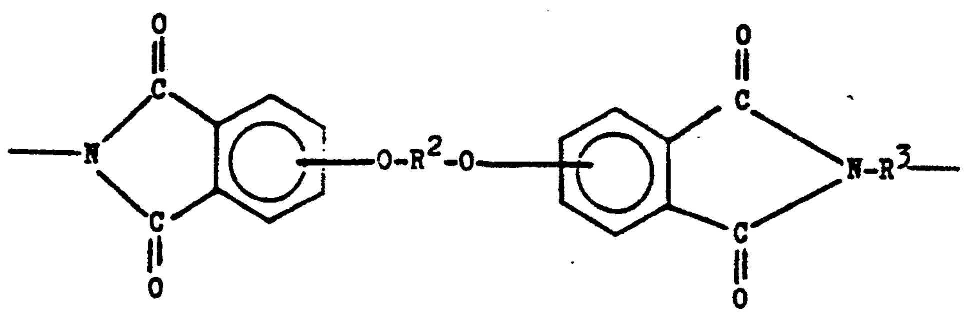

,

worin $R^2$ ausgewählt ist aus (a) den folgenden zweiwertigen organischen Resten

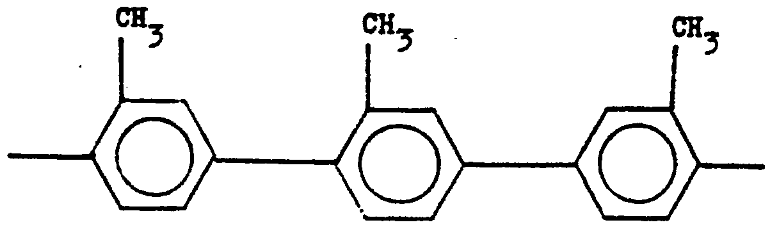

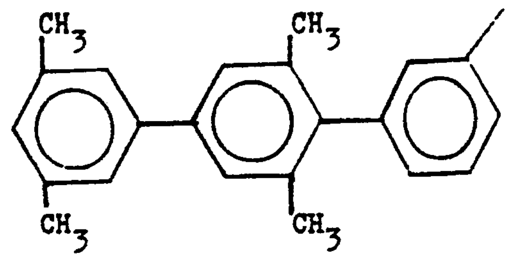

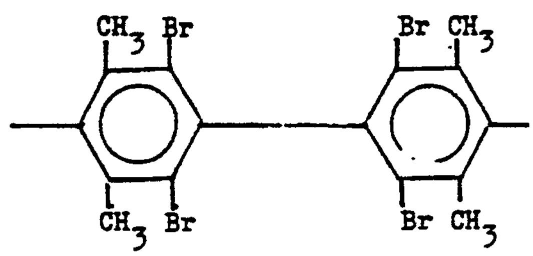

und 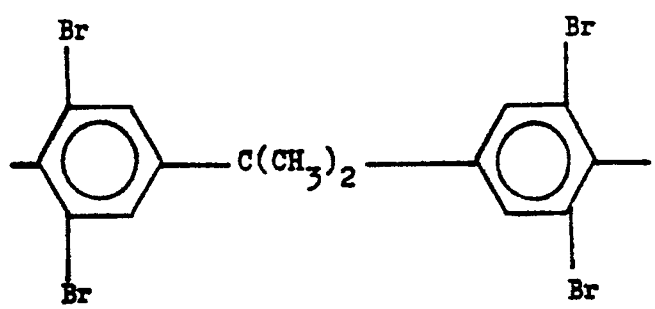

und (b) zweiwertigen organischen Resten der allgemeinen Formel

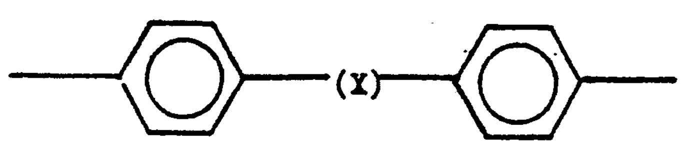 ,

worin x für $-C_yH_{2y}-$ steht, wobei der Index y eine Zahl von 1 bis einschließlich 5 ist, und $R^3$ einen zweiwertigen organischen Rest bedeutet, der ausgewählt ist aus (a) aromatischen Kohlenwasserstoffresten mit 6 bis 20 Kohlenstoffatomen und halogenierten Derivaten hiervon, (b) Alkylenresten und Cycloalkylenresten mit 2 bis 20 Kohlenstoffatomen, (c) durch $C_{(2-8)}$-Alkylengruppen abgeschlossene Polydiorganosiloxane und (d) zweiwertige Reste der folgenden Formel

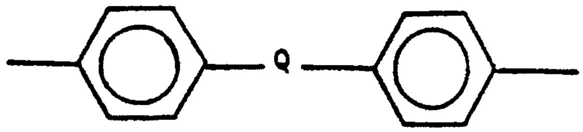

,

worin Q ausgewählt ist aus

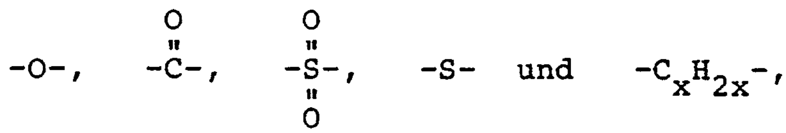

und

wobei der Index x eine Zahl von 1 bis 5 ist.

**10.** Zusammensetzung nach einem der Ansprüche 6 bis 9, worin $R^2$ die folgende Formel hat:

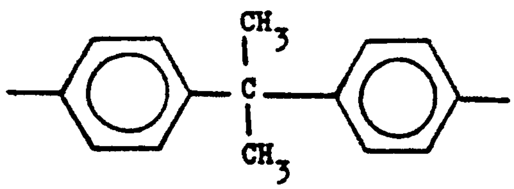

**11.** Zusammensetzung nach einem der Ansprüche 6 bis 10, worin $R^3$ für m-Phenylen steht.

**12.** Zusammensetzung nach einem der Ansprüche 1 bis 5, worin das Polyetherimid wiederkehrende Einheiten der folgenden Formel enthält:

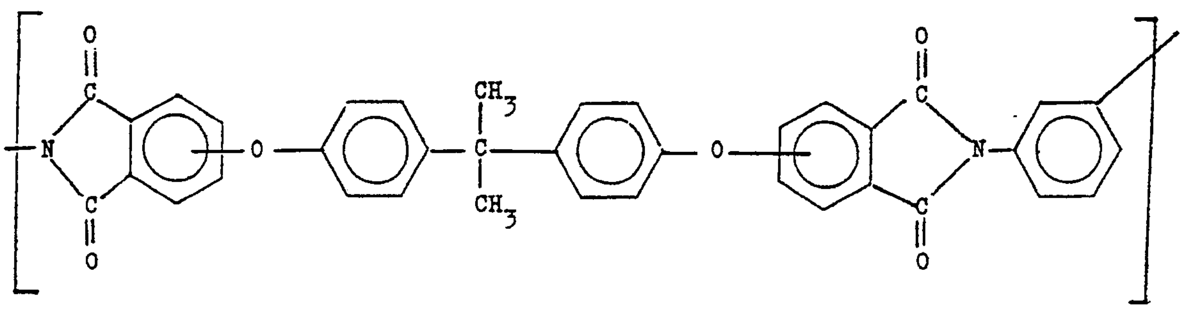

**13.** Gemisch nach einem der vorhergehenden Ansprüche in Kombination mit einem Füllstoff, wobei der Füllstoff etwa 10 bis 80 Gewichtsprozent der gesamten Kombination ausmacht.

**14.** Gemisch nach Anspruch 13, worin der Füllstoff unter Glasfasern, Glasperlen und Graphit ausgewählt ist.

**15.** Formkörper, geformt aus einem Gemisch nach einem der vorhergehenden Ansprüche.

**16.** Film mit einer Dicke von 0,013 bis 0,25 mm (0,5 bis 10 mil), geformt aus einem Gemisch nach einem der Ansprüche 1 bis 12.

**17.** Verfahren zur Verbesserung des Dickwandformungsverhaltens, der Festigkeit nach der Formung und der Zähigkeit eines Amid-Imid-Phthalimid-Copolymerisats mit wiederkehrenden Polyamid-Imid-Einhei-

ten der Formel A'

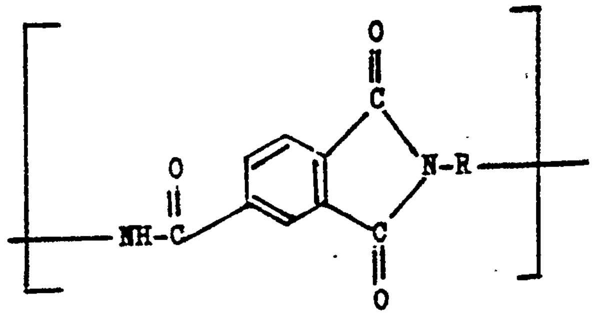

und Polyamideinheiten B

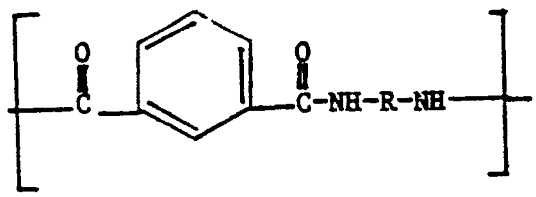

,

wobei das Molverhältnis der Einheiten A' zu den Einheiten B etwa 1:1 beträgt,

worin die einzelnen Reste R gleich oder verschieden sein können und einen zweiwertigen Kohlenwasserstoffrest mit 6 bis 20 Kohlenstoffatomen oder zwei zweiwertige Kohlenwasserstoffreste bedeuten, die direkt oder über stabile Brücken miteinander verbunden sind, die ausgewählt sind aus -O-, Methlyen, -CO- und $-SO_2-$, dadurch gekennzeichnet, daß dieses Copolymerisat mit einer solchen Menge eines Polyetherimids vermischt wird, daß sich im Gemisch 10 bis 40 Gewichtsprozent des Polyetherimids ergeben.

**18.** Verfahren nach Anspruch 17, worin das Amid-Imid-Phthalimid-Copolymerisat und Polyetherimid wie in einem der Ansprüche 1 bis 12 definiert sind.